# EUROPEAN PATENT APPLICATION

(11) **EP 3 282 591 A1**
(43) Date of publication of application: **14.02.2018**
(21) Application number: 16776671.6
(22) Date of filing: 08.04.2016
(51) Int. Cl.: H04B 7/02, H04W 72/04

(54) **RADIO BASE STATION, USER TERMINAL AND RADIO COMMUNICATION METHOD**

(30) Priority: 09.04.2015 JP 2015080325
(71) Applicant: NTT DOCOMO, INC., Chiyoda-ku Tokyo 100-6150 (JP)
(72) Inventor: MOROGA, Hideyuki, Tokyo 100-6150 (JP); TAKEDA, Kazuaki, Tokyo 100-6150 (JP); YASUKAWA, Shimpei, Tokyo 100-6150 (JP); NAGATA, Satoshi, Tokyo 100-6150 (JP)
(74) Representative: Hoffmann Eitle
(86) International application number: PCT/JP2016/061500
(87) International publication number: WO 2016/163505

(57) **Abstract**

The present invention is designed to reduce the monopolization of resources and reduce the decrease of spectral efficiency in communication by user terminals that are limited to using partial reduced bandwidths in a system bandwidth as bandwidths for their use. A radio base station that communicates with a user terminal, in which the bandwidth to use is limited to a partial reduced bandwidth in a system bandwidth, has a transmission section that transmits a downlink signal to the user terminal in repetitious transmission, and a control section that controls transmission intervals in repetitious transmission, and the transmission section reports information related to the transmission intervals in repetitious transmission to the user terminal.

## Description

### Technical Field

The present invention relates to a radio base station, a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, successor systems of LTE (also referred to as, for example, "LTE-advanced" (hereinafter referred to as "LTE-A"), "FRA" (Future Radio Access) and so on) are under study for the purpose of achieving further broadbandization and increased speed beyond LTE.

Now, accompanying the cost reduction of communication devices in recent years, active development is in progress in the field of technology related to machine-to-machine (M2M) communication to implement automatic control of network-connected devices and allow these devices to communicate with each other without involving people. In particular, 3GPP (3rd Generation Partnership Project) is promoting the standardization of MTC (Machine-Type Communication) for cellular systems for machine-to-machine communication, among all M2M technologies (see non-patent literature 2). MTC terminals are being studied for use in a wide range of fields such as, for example, electric meters, gas meters, vending machines, vehicles and other industrial equipment.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: 3GPP TS 36.888 "Study on provision of low-cost Machine-Type Communications (MTC) User Equipments (UEs) based on LTE (Release 12)"

### Summary of Invention

### Technical Problem

From the perspective of reducing the cost and improving the coverage area in cellular systems, among all MTC terminals, low-cost MTC terminals (low-cost MTC UEs) that can be implemented in simple hardware structures have been increasingly in demand. Low-cost MTC terminals can be implemented by limiting the bandwidth to use in the uplink (UL) and the downlink (DL) to a portion (one component carrier, for example) of a system bandwidth.

When the bandwidth for use is limited to a portion of a system bandwidth (for example, to a 1.4-MHz frequency bandwidth), the receiving performance deteriorates. Furthermore, a study is in progress to apply coverage enhancement to MTC terminals. As a method of allowing MTC terminals to achieve improved receiving performance and enhanced coverage, it may be possible to employ the method of "repetition," which improves the received-signal-to-interference/noise ratio (SINR: Signal-to-Interference plus Noise Ratio) by repeating transmitting the same signal over multiple subframes in the downlink (DL) and/or the uplink (UL).

However, when repetition is applied to consecutive subframes, there is a threat that MTC terminals will monopolize the resources. Also, depending on the environment communication takes place and/or other factors, the number of repetitions to achieve desired performance might increase, and this might lower the spectral efficiency.

The present invention has been made in view of the above, and it is therefore an object of the present invention to provide a user terminal, a radio base station and a radio communication method that can reduce the monopolization of resources, and that, furthermore, can reduce the decrease of spectral efficiency in communication by user terminals that are limited to using partial reduced bandwidths in a system bandwidth as bandwidths for their use.

### Solution to Problem

According to one aspect of the present invention, a radio base station communicates with a user terminal, in which the bandwidth to use is limited to a partial reduced bandwidth in a system bandwidth, and this radio base station has a transmission section that transmits a downlink signal to the user terminal in repetitious transmission, and a control section that controls the transmission intervals in repetitious transmission, and the transmission section reports information related to the transmission intervals in repetitious transmission to the user terminal.

### Advantageous Effects of Invention

According to the present invention, it is possible to reduce the monopolization of resources, and, furthermore, reduce the decrease of spectral efficiency even in communication by user terminals that are limited to using partial reduced bandwidths in a system bandwidth as bandwidths for their use.

### Brief Description of Drawings

FIGs. 1 provide diagrams to explain repetition (repetitious transmission);
FIG. 2 is a diagram to show an example of transmission operation when intervals are provided between transmissions in repetition;
FIGs. 3 provide diagrams to explain the method of providing transmission intervals in repetition;
FIG. 4 is a diagram to show examples of intervals provided between transmissions in repetition, according to the present embodiment;
FIGs. 5 provide diagrams to show tables that link between predetermined parameters and transmission intervals in repetition;
FIGs. 6 provide diagrams to show examples of intervals provided between transmissions based on whether or not hopping is used;
FIGs. 7 provide diagrams to show examples of scheduling of groups that use different transmission intervals in repetition;
FIGs. 8 provide diagrams to show examples of cases where different transmission intervals are provided between a plurality of channels;
FIG. 9 is a diagram to show an example of a case where consecutive subframes and transmission intervals are applied to repetition;
FIG. 10 is a diagram to show a schematic structure of a radio communication system according to an embodiment of the present invention;
FIG. 11 is a diagram to show an example of an overall structure of a radio base station according to an embodiment of the present invention;
FIG. 12 is a diagram to show an example of a functional structure of a radio base station according to an embodiment of the present invention;
FIG. 13 is a diagram to show an example of an overall structure of a user terminal according to an embodiment of the present invention; and
FIG. 14 is a diagram to show an example of a functional structure of a user terminal according to an embodiment of the present invention.

### Description of Embodiments

A study in progress to limit the processing capabilities of terminals by making the peak rate low, limiting the resource blocks, allowing limited RF reception and so on, in order to reduce the cost of MTC terminals. For example, the maximum transport block size in unicast transmission using a downlink data channel (PDSCH: Physical Downlink Shared Channel) is limited to 1000 bits, and the maximum transport block size in BCCH transmission using a downlink data channel is limited to 1000 bits or less. Furthermore, the downlink data channel bandwidth is limited to 6 resource blocks (also referred to as "RBs" (Resource Blocks), "PRBs" (Physical Resource Blocks), etc.). Furthermore, the RFs to receive in MTC terminals are limited to one.

The transport block size and the resource blocks in low-cost MTC terminals (low-cost MTC UEs) are more limited than in existing user terminals, and therefore low-cost MTC terminals cannot connect with cells that comply with LTE Rel. 8 to 11. Consequently, low-cost MTC terminals connect only with cells where a permission of access is reported to the low-cost MTC terminals in broadcast signals. Furthermore, a study is in progress to limit not only downlink data signals, but also various control signals that are transmitted on the downlink (such as system information, downlink control information and so on), data signals and various control signals that are transmitted on the uplink, and/or other signals, to predetermined reduced bandwidths (for example, 1.4 MHz).

Such band-limited MTC terminals need to be run in the LTE system bandwidth, considering the relationship with existing user terminals. For example, it might occur that frequency-multiplexing of band-limited MTC terminals and band-unlimited existing user terminals may be supported in a system bandwidth. Furthermore, band-limited user terminals may only support RFs of predetermined reduced-bandwidth in the uplink and the downlink. Here, MTC terminals refer to terminals that support only partial reduced bandwidths in a system bandwidth as the maximum bandwidth they can support, and existing user terminals refer to terminals that support the system bandwidth (for example, 20 MHz) as the maximum bandwidth they can support.

That is, the upper limit bandwidth for use for MTC terminals is limited to a reduced bandwidth, while the upper limit bandwidth for use for existing user terminals is configured to a system bandwidth. MTC terminals are designed presuming reduced bandwidths, and therefore the hardware structure is simplified, and their processing capabilities are low compared to existing user terminals. Note that MTC terminals may be referred to as "low-cost MTC terminals" (LC-MTC UEs), "MTC UEs" and so on. Existing user terminals may be referred to as "normal UEs," "non-MTC UEs," and so on.

Now, a study is in progress to apply coverage enhancement to wireless communication with MTC terminals. For example, for MTC terminals, coverage enhancement of maximum 15 dB is under study, in comparison to existing user terminals.

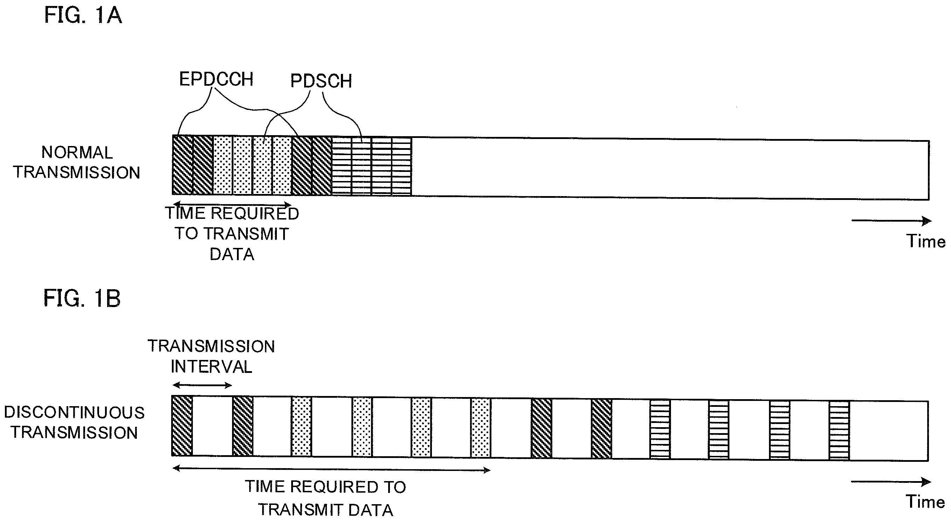

As for the method of coverage enhancement in wireless communication by MTC terminals, "repetition," in which the same signal is transmitted in repetitions in a plurality of subframes in the uplink (UL) and/or the downlink (DL), may be employed. However, when repetition is employed, there is a fear that specific MTC terminals might monopolize the resources (see FIG. 1A). However, depending on the environment in which communication takes place, the number of repetitions to achieve desired coverage performance (for example, coverage of maximum 15 dB) increases, and therefore the spectral efficiency might decrease.

The present inventors have focused on the point that, by providing transmission intervals in repetitious transmission ("repetition"), it may be possible to disperse the resource time to allocate to a predetermined MTC terminal that is engaged in repetitious transmission, and secure time resource that can be allocated other UEs (see FIG. 1B). Also, the present inventors have focused on the point that, by providing transmission intervals in repetition, it may be possible to gain a time diversity effect and reduce the number of repetitions. Note that transmission that is carried out by providing transmission intervals in repetition in UL or DL is also referred to as "discontinuous transmission."

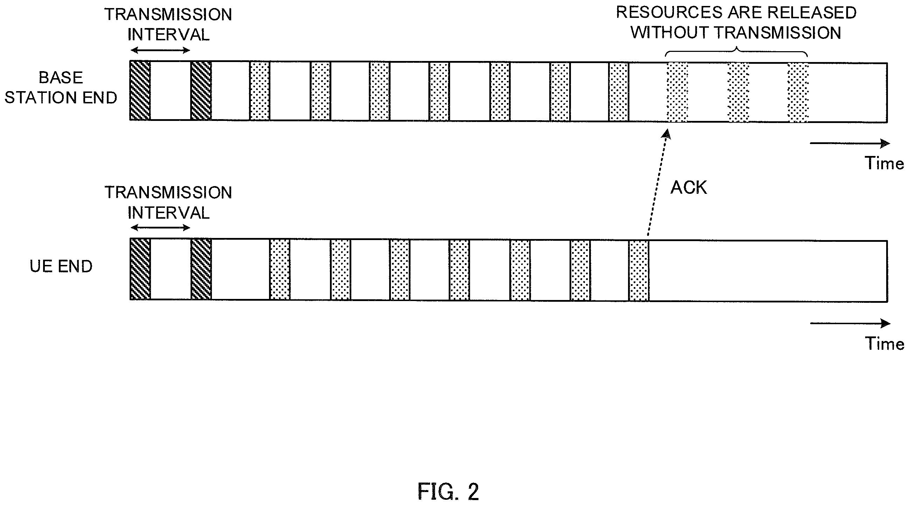

When discontinuous transmission to provide transmission intervals in repetition is employed, it becomes possible to stop repetition during discontinuous transmission depending on the receiving conditions of a user terminal (see FIG. 2). FIG. 2 shows a case where a radio base station transmits DL data to a user terminal in repetitions at predetermined transmission intervals, and where the user terminal feeds back a delivery acknowledgement signal (HARQ-ACK) in response to the DL signal. The radio base station can stop repetition when an ACK is fed back from a user terminal that has received the DL data successfully. By this means, the radio base station can release the radio resources reserved for the rest of the repetitions of the DL data, thereby improving the spectral efficiency.

On the other hand, when intervals are provided between transmissions in repetition on a fixed basis, problems might arise depending on the environment communication takes place and/or other factors. For example, when long intervals are provided between transmissions in repetition, the problem of increased delay time will arise.

So, the present inventors have found out that it is effective to control the transmission intervals in repetition based on the environment of communication, including the situation of traffic and the received quality in user terminals (for example, MTC terminals), and based on the user terminal and/or system requirements. For example, the transmission intervals in repetition may be controlled based on, for example, (1) the situation of traffic in non-MTC terminals, (2) the number of repetitions and (3) the delay time requirement for MTC terminals.

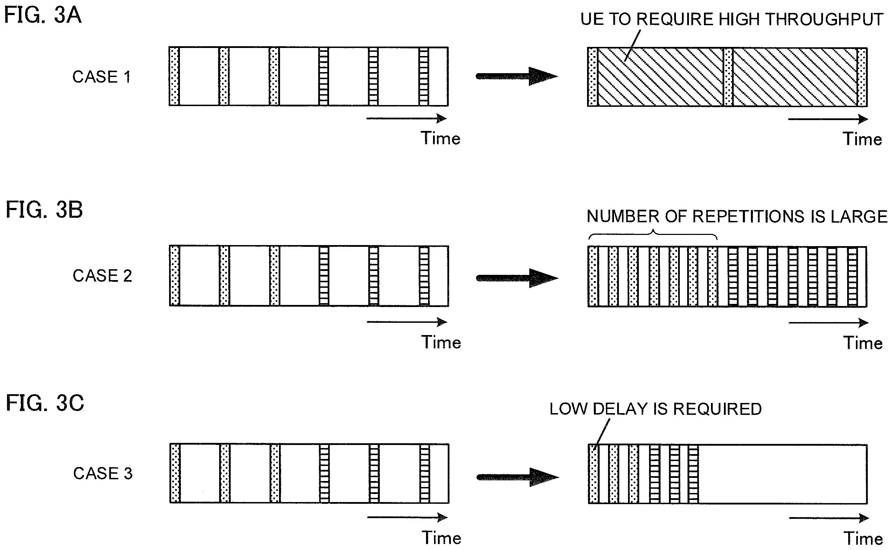

When the transmission intervals in repetition are controlled based on (1) the situation of traffic in non-MTC terminals, it may be possible to preferentially allocate resources to user terminals (normal UEs) where high throughput is demanded, and tolerate delays in MTC terminals. In this case, the transmission intervals in repetition are configured long for the MTC terminals (see FIG. 3A).

Also, when the transmission intervals in repetition are controlled based on (2) the number of repetitions, considering that the delay time grows when the number of repetitions increases, it may be possible to configure short transmission intervals for MTC terminals where the number of repetitions is large (see FIG. 3B). FIG. 3B shows a case where short transmission intervals are configured when the number of repetitions is increased.

Also, when the transmission intervals in repetition are controlled based on (3) the delay time requirement for MTC terminals and suchlike factors, it may be possible to configure the transmission intervals in repetition short in situations (systems) where low delay is required (see FIG. 3C).

In this way, by controlling the transmission intervals in repetition based on the communicating environment and so on, it is possible to reduce the monopolization of resources and improve the spectral efficiency, and, consequently, allow adequate transmission and/or receipt in MTC terminals.

Meanwhile, when controlling the transmission intervals in repetition, the receiving end (for example, MTC terminals in DL and radio base stations in UL) has to learn information related to the transmission intervals adequately. So, the present inventors have arrived at a method of controlling the transmission intervals in repetition, and reporting information related to the transmission intervals to receiving terminals (for example, MTC terminals).

Now, the present embodiment will be described below in detail. Although, in the following description, MTC terminals will be illustrated as exemplary user terminals that are limited to using reduced bandwidths as bands for their use, the application of the present embodiment is by no means limited to MTC terminals, and the present embodiment can be applied to any terminals that can make repetitious transmission. Furthermore, although examples will be shown in the following description where the present embodiment is applied to DL signals (for example, the PDSCH) transmitted from a radio base station to MTC terminals, it is equally possible to apply the present embodiment to UL signals that are transmitted from MTC terminals to a radio base station (for example, the PUSCH). Furthermore, the signals and channels to which the present embodiment can be applied are not limited to data signals (the PDSCH, the PUSCH, etc.), and the present embodiment can be applied to control signals (for example, the EPDCCH) and reference signals (for example, the CSI-RS, the CRS, the DMRS, the SRS, etc.) as well.

### (First Example)

A case will be described with the first example where a radio base station explicitly reports information related to the transmission intervals in repetition on a per MTC terminal basis or on a per cell basis (explicit signaling).

### <Configuration per MTC terminal>

A radio base station can configure and change the transmission intervals in repetition per MTC terminal, separately. For example, based on predetermined conditions such as the environment in which communication takes place, the radio base station selects the transmission intervals in repetition for each MTC terminal, and reports information related to the transmission intervals to the MTC terminals. Note that the radio base station can also control the number of repetitions likewise.

When configuring the transmission intervals in repetition on a per MTC terminal basis, the radio base station can report information related to the transmission intervals to each MTC terminal by using downlink control information (DCI) that is transmitted in an enhanced control channel (EPDCCH). B reporting the transmission intervals to MTC terminals by using downlink control information, it becomes possible to control the switching of transmission intervals on a dynamic basis.

In this case, the radio base station can transmit the information related to the transmission intervals by using an existing bit field in downlink control information. For example, among the existing bit fields included in DCI, the radio base station can use a bit field that is not used in wireless communication with MTC terminals (for example, the "localized/distributed VRB assignment flag" field). Alternatively, the radio base station may provide a new bit field for identifying the transmission intervals. In this case, transmission intervals to correspond to each variation of bit information are defined advance, so that MTC terminals can identify the transmission intervals based on the predetermined bit information contained in DCI. Information about the bit information-specific transmission intervals may be reported through higher layer signaling.

Also, the radio base station can configure/report transmission intervals per MTC terminal, separately, by using higher layer signaling. When information related to transmission intervals is reported by using higher layer signaling (for example, RRC signaling), it becomes possible to control the switching of transmission intervals on a semi-static basis.

### <Configuration per cell>

A radio base station can provide common transmission intervals in repetition for MTC terminals in the same cell. For example, when the volume of traffic in a cell is heavy and/or when there are many user terminals other than MTC terminals, it is possible to employ a configuration in which the transmission intervals in repetition are configured long, and in which the resources are preferentially allocated to the user terminals that are not MTC terminals. Alternatively, when the volume of traffic in a cell is low and/or when there are few user terminals other than MTC terminals, it is possible to employ a configuration in which the transmission intervals in repetition are configured short, and in which the resources are preferentially allocated to the MTC terminals.

The radio base station can place information related to transmission intervals in broadcast information (MIB) and/or system information (SIB) and report this to the MTC terminals in the cell. Alternatively, when a common search space (CSS) is configured in an enhanced downlink control channel (EPDCCH), the transmission interval-related information may be placed in this CSS.

In this way, by allowing a radio base station to control the transmission intervals in repetition and report information about these transmission intervals to MTC terminals, the MTC terminals can adequately receive the DL signals that are transmitted in repetitions at predetermined transmission intervals. By this means, it is possible to reduce the monopolization of resources, and, furthermore, reduce the decrease of spectral efficiency, in communication by MTC terminals.

### <Repetition pattern control>

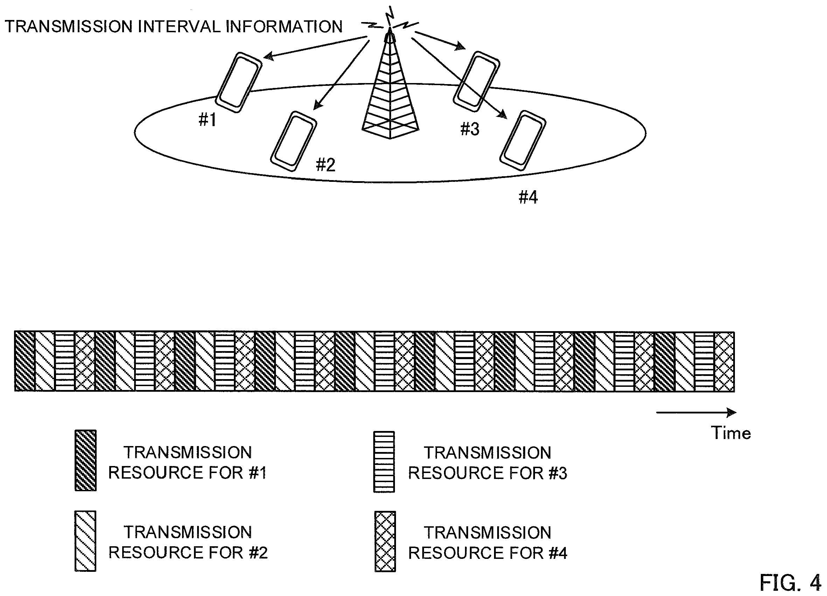

Also, when applying repetition to DL signals by providing transmission intervals, it may be possible to apply different repetition patterns (repetitious transmission patterns) among multiple (at least two) MTC terminals to prevent the collision of resources between MTC terminals. FIG. 4 shows an example of resource allocation when a radio base station transmits DL signals to a plurality of MTC terminals #1 to #4 in repetitions by providing predetermined transmission intervals.

To be more specific, FIG. 4 illustrates a case where the radio base station configures the repetition pattern so that the DL signals to be transmitted to MTC terminals #1 to #4 are allocated to different subframes. Note that, although FIG. 4 shows a case where the same transmission intervals (here, 4 subframes) are configured in each of a plurality of MTC terminals #1 to #4, it is also possible to configure varying repetition patterns in MTC terminals where different transmission intervals are configured.

Also, although FIG. 4 illustrates a case of employing a configuration in which each MTC terminal's repetition pattern is changed (shifted) along the direction of time (for example, subframes) and made different, the control of repetition patterns is by no means limited to this. For example, it is possible to shift each MTC terminal's repetition pattern in the direction of frequency (hopping).

The radio base station can place information related to repetition patterns in downlink control information and report this to the MTC terminals. The information related to repetition patterns may be predetermined repetition patterns, or may be information such as the starting location of allocation (the offset value from a reference location). Note that the radio base station may report the information related to transmission intervals in repetition and the information related to repetition patterns to the MTC terminals together. Also, the radio base station may configure/report the information related to transmission intervals in repetition and/or the information related to repetition patterns in common between DL signals (DL channels) and UL signals (UL channels), or configure/report these individually.

Alternatively, the repetition patterns may be linked based on each MTC terminal's identification number (for example, user ID). For example, it may be possible to apply repetition pattern #1 to odd-numbered user IDs and apply repetition pattern #2 to even-numbered user IDs. In this way, by making it possible to configure different repetition patterns between MTC terminals, it is possible to prevent the collision of allocated resources.

### (Second Example)

A case will be described with a second example where the transmission intervals in repetition are controlled/reported based on predetermined conditions. To be more specific, a case where a radio base station links the transmission intervals in repetition with predetermined parameters for control, and implicitly report information about these transmission intervals to MTC terminals (implicit signaling), or a case where MTC terminals make decisions autonomously, will be described.

### <The number of repetitions>

In communication by MTC terminals, a radio base station and/or an MTC terminal can control the transmission intervals in repetition based on the number of repetitions. For example, when the number of repetitions for a DL signal is 4, the radio base station transmits the DL signal at transmission intervals of 50 subframes. Alternatively, when the number of repetitions for a DL signal is 100, the radio base station can transmit the DL signal at transmission intervals of 2 subframes.

In this case, the radio base station can report information related to the number of repetitions for the downlink signal (for example, the PDSCH) to the MTC terminal by using either broadcast information (MIB), system information (SIB), higher layer signaling (for example, RRC signaling) or downlink control information (DCI).

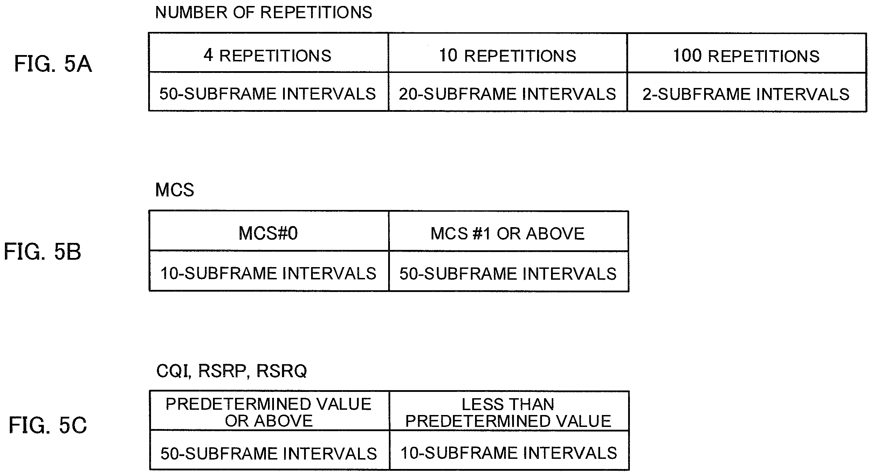

Based on the information related to the number of repetitions, reported from the radio base station thus, the MTC terminal can learn the transmission intervals applied to DL signals and/or UL signals. In this case, it is possible to configure a table, in which the relationships between predetermined numbers of repetitions and transmission intervals are defined, and to allow the radio base station and the MTC terminal to have this table in advance (see FIG. 5A). Note that, although, in FIG. 5A, the predetermined numbers of repetitions are 4, 10 and 100, these are by no means limiting. Furthermore, a structure may be used here, in which the contents of the table (for example, the predetermined numbers of repetitions) are reported from the radio base station to the MTC terminal in advance by using higher layer signaling and so on.

Note that MTC terminal may select the transmission intervals to apply to a UL signal based on the number of times to repeat the UL signal. Information about the number of repetitions of the UL signal may be reported from the radio base station to the MTC terminal as with DL signal. In this case, the radio base station may report information related to the number of repetitions for a UL signal and information related to the number of repetitions for a downlink signal to the MTC terminal together, or separately. Alternatively, a structure may be employed here, in which the transmission intervals to apply to a UL signal are made the same as the transmission intervals to apply to a DL signal, regardless of the number of repetitions, or directly specified by the radio base station.

In this way, by linking between the numbers of repetitions and transmission intervals for control, it is possible to carry out communication by selecting adequate transmission intervals in wireless communication by MTC terminals. Furthermore, the operation for from the radio base station to the MTC terminal can be removed.

### <MCS>

In communication by MTC terminals, a radio base station and/or an MTC terminal may control the transmission intervals in repetition based on the modulation scheme/channel coding rate (MCS: Modulation and Coding Scheme).

An MCS refers to the combination of a modulation scheme and a channel coding rate, and the radio base station selects a predetermined MCS (MTC index) based on a channel quality indicator (CQI) that is fed back from the MTC terminal. For example, the radio base station selects a predetermined MCS from a table in which a plurality of MCS indices are defined in advance, based on a CQI that is fed back. Furthermore, information related to the selected MCS can be reported from the radio base station to the MTC terminal.

Usually, when the MCS index is large, the TB (transport block) size is also large, and therefore high throughput can be achieved. On the other hand, MCSs of small indices are used for terminals located in places where the communicating environment is poor (for example, cell edges and so on). For example, when repetition is applied, it may be possible to configure a large the number of repetitions for an MTC terminal using a small MCS.

According to the present embodiment, when the MCS index is equal to or less than a predetermined value (for example, MCS #0), relatively short transmission intervals (for example, 10-subframe intervals) are applied. On the other hand, when the MCS index is greater than a predetermined value (for example, greater than MCS #0), relatively long transmission intervals (for example, 50-subframe intervals) are applied.

The radio base station can report MCS-related information to the MTC terminal by using downlink control information (DCI). The MTC terminal can identify the transmission intervals to apply to repetition based on the MCS index reported from the radio base station. In this case, it is possible to configure a table in which the relationships between MCS indices and transmission intervals are defined, and to allow the radio base station and the MTC terminal to have this table in advance (see FIG. 5B). Furthermore, a structure may be used here in which the contents of the table (for example, MCS indices) are reported from the radio base station to the MTC terminal in advance.

In this way, by linking between MCSs and transmission intervals for control, it is possible to carry out communication by selecting adequate transmission intervals in wireless communication by MTC terminals. Furthermore, the operation for explicitly reporting information related to transmission intervals from the radio base station to the MTC terminals can be removed.

### <CQI, RSRP, RSRQ>

In communication by MTC terminals, a radio base station and/or an MTC terminal may control the transmission intervals in repetition based on at least one of a channel quality indicator (CQI), received power (RSRP) and received quality (RSRQ).

The CQI is a channel state indicator, and the MTC terminal estimates the CQI from reference signals (for example, CSI-RS) transmitted from the radio base station, and feeds back the estimated CQI to the radio base station. Furthermore, the RSRP (Reference Signal Received Power) is the received power in the MTC terminal, and the MTC terminal measures the received power based on reference signals (for example, CRS) transmitted from the radio base station, and feeds back the measured received power to the radio base station. The RSRQ (Reference Signal Received Quality) is the received quality in the MTC terminal, and calculated based on the ratio between the received power (RSRP) and the total received power (RSSI: Received Signal Strength Indicator).

The radio base station and/or the MTC terminal can apply relatively long transmission intervals (for example, 50-subframe intervals) when the CQI, the RSRP and/or the RSRQ are equal to or greater than a predetermined value (an arbitrarily-determined fixed value). On the other hand, when the CQI, the RSRP and/or the RSRQ are less than the predetermined value, relatively short transmission intervals (for example, 10-subframe intervals) can be applied. In this case, the transmission intervals may be selected based on one of the CQI, the RSRP and the RSRQ, or it is equally possible to select the transmission intervals based on whether or not two or more of these (for example, the CQI and the RSRP) are equal to or greater than the predetermined value. Obviously, it is equally possible to select the transmission intervals based on whether or not all of the three are equal to or greater than the predetermined value.

The radio base station can select the transmission intervals in repetition based on information fed back from the MTC terminal such as the CQI, the RSRP and so on. The MTC terminal can select, autonomously, the transmission intervals to apply to DL signals and/or UL signals based on the CQI value and/or the RSRP value measured. Note that the MTC terminal may select the transmission intervals based on information reported from the radio base station as well.

It is possible to configure a table, in which the relationships among the CQI, the RSRP and/or the RSRQ and transmission intervals are defined, and to allow the radio base station and the MTC terminal to have this table in advance (see FIG. 5C). Note that a structure may be used here, in which the contents of the table (for example, CQI, RSRQ and/or RSRQ values) are reported from the radio base station to the MTC terminal in advance.

In this way, by linking between the CQI, the RSRP and/or the RSRQ and transmission intervals for control, it is possible to carry out communication by selecting adequate transmission intervals in wireless communication by MTC terminals. Furthermore, the operation for explicitly reporting information related to transmission intervals from the radio base station to the MTC terminals can be removed.

### <Frequency hopping>

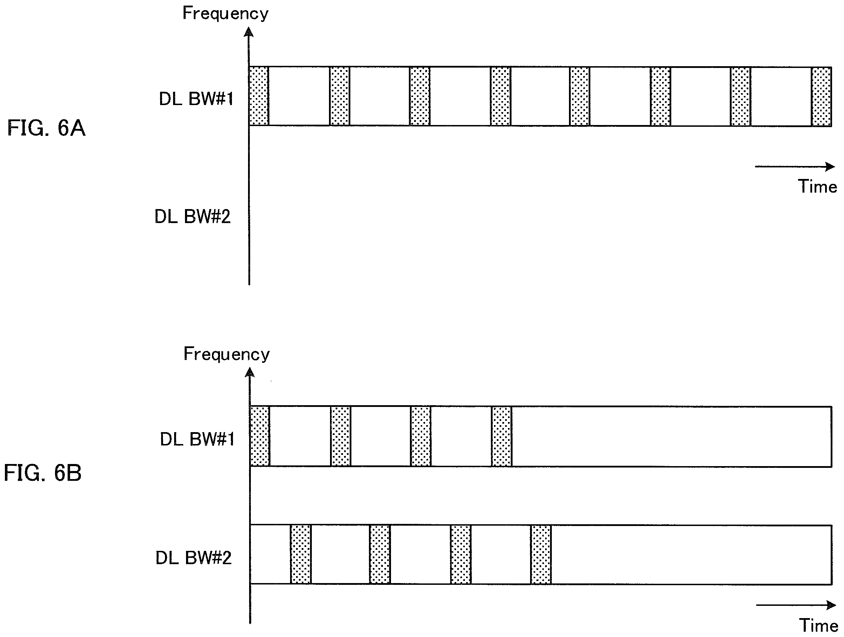

In communication by MTC terminals, a radio base station and/or an MTC terminal may control the transmission intervals in repetition based on frequency hopping information (for example, whether or not frequency hopping is applied). For example, the radio base station and/or the MTC terminal can apply relatively long transmission intervals when frequency hopping is not employed (see FIG. 6 A), and apply relatively short transmission intervals when frequency hopping is employed (see FIG. 6 B). In this case, if frequency hopping is employed, it becomes possible to configure the transmission intervals in repetition short.

Note that the transmission intervals in repetition can be configured by appropriately combining the multiple parameters described above (the number of repetitions, the MCS, the CQI/RSRP/RSRQ and frequency hopping). For example, assuming the case where the number of repetitions is 10, it is possible to provide 20-subframe transmission intervals when frequency hopping is not employed, or provide 10-subframe transmission intervals when frequency hopping is employed.

### (Third Example)

A case will be descried with a third example where MTC terminals are classified (groups) based on the transmission intervals to apply to DL signals in repetition, and the allocation of resources is controlled. Note that the third example will assume a case where the transmission intervals are configured/reported on a per MTC terminal basis.

A radio base station configures/reports the repetition transmission intervals for DL signals that are transmitted to each MTC terminal. The transmission intervals in repetition, which are configured for each MTC terminal's DL signals, can be configured based on predetermined conditions.

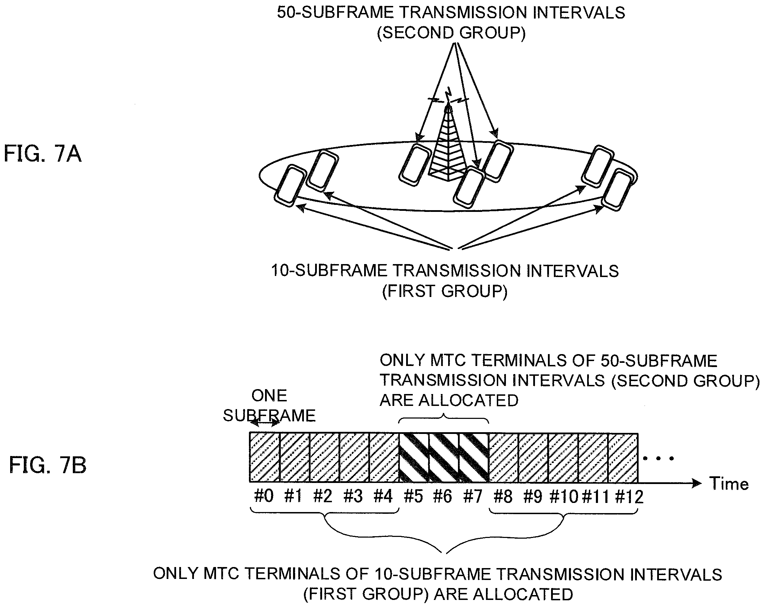

Also, the radio base station classifies (groups) MTC terminals based on the transmission intervals configured. FIG. 7A shows, as an example, the case where MTC terminals are classified into an MTC terminal group (first group) where the transmission intervals in repetition are 10 subframes, and an MTC terminal group (second group) where the transmission intervals in repetition are 50 subframes.

Furthermore, the radio base station configures different resource patterns for each group, and reports information about the resource patterns to the MTC terminals of each group. Note that the information about the resource patterns can be reported to the MTC terminals by using one of broadcast information (MIB), system information (SIB), higher layer signaling (for example, RRC signaling) and downlink control information (DCI).

For example, the radio base station can transmit DL signals to the MTC terminals belonging in the first group by using radio resources in a first period, and transmit DL signal to the MTC terminals belonging in the second group by using radio resources in a second period (see FIG. 7B). Here, the first period and the second period may be different periods along the direction of time.

Each MTC terminal performs receiving processes for predetermined resources based on the information about the resource patterns. For example, the MTC terminals belonging in the first group perform receiving processes for the resources allocated in the first period, and the MTC terminals belonging in the second group perform receiving processes for the resources allocated in the second period. That is, an MTC terminal has to perform receiving processes only for resources allocated to the group where this MTC terminal belongs.

By thus classifying MTC terminals based on transmission intervals in repetition and controlling the allocation of resources, it is possible to simplify the scheduling by radio base stations (assignment of MTC terminals, and so on). Also, MTC terminals have only to perform receiving processes (monitoring) for limited, predetermined frequency resources, so that the power consumption of MTC terminals can be reduced.

### (Other examples)

According to the present embodiment, the transmission intervals in repetition can be configured for each different channel or signal. For example, in DL transmission, different transmission intervals may be configured between a control channel (EPDCCH) and a shared channel (PDSCH).

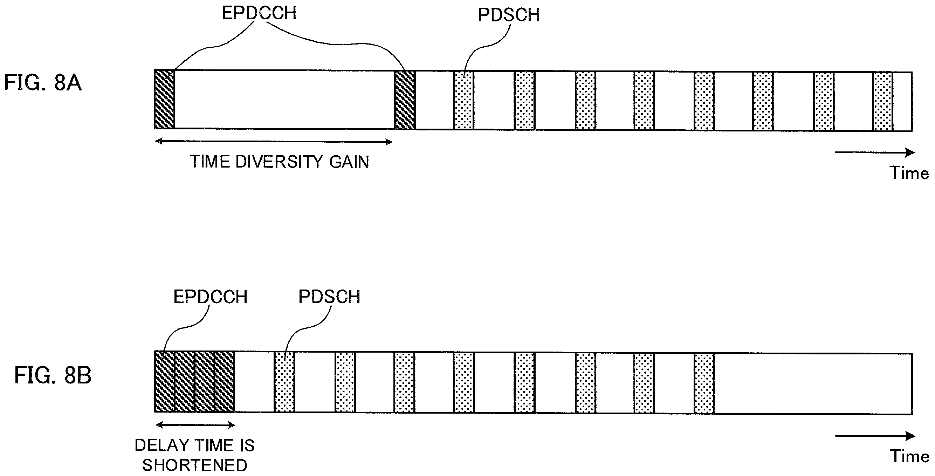

For example, since the EPDCCH is smaller than the PDSCH in size (capacity), the number of repetitions for the EPDCCH can be made smaller than the PDSCH. From the perspective of gaining time diversity, the repetition transmission intervals to apply to the EPDCCH are configured longer than the repetition transmission intervals to apply to the PDSCH (see FIG. 8A). On the other hand, from the perspective of making the delay time short, the repetition transmission intervals to apply to the EPDCCH are configured shorter than the repetition transmission intervals to apply to the PDSCH (see FIG. 8B).

In this way, by configuring the transmission intervals in repetition separately for each of plurality of channel, it is possible to implement control that is suitable for the required performance and so on.

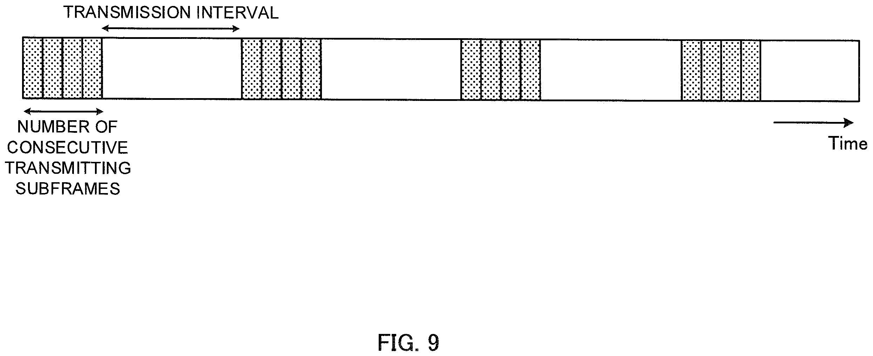

Also, although cases have been shown with the above description where DL signals are repeated in one-subframe units (discontinuous subframes), the present embodiment is by no means limited to this. It is equally possible to bundle a plurality of subframes (consecutive subframes) in which repetition is made, and provide transmission intervals of consecutive subframes (see FIG. 9). FIG. 9 shows a case where repetition is made in four consecutive subframe-units, and where predetermined transmission intervals are provided every four subframes.

In this way, by transmitting the same signal in multiple consecutive subframes and combining the signals of these consecutive subframes on the receiver's end, it is possible to improve the accuracy of channel estimation. Also, this channel estimation is also referred to as cross-subframe channel estimation.

Also, when repetition to use consecutive subframes is employed, the radio base station can report information about the number of consecutive transmitting subframes to MTC terminals. For example, information about the number of consecutive subframes can be reported to MTC terminals by using one of broadcast information (MIB), system information (SIB), higher layer signaling (for example, RRC signaling) and downlink control information (DCI). The information about the number of consecutive subframes may be reported on a per MTC terminal basis or on a per cell basis. Also, it is equally possible to report information about the number of consecutive subframes and information related to the transmission intervals in repetition to MTC terminals together.

### (Structure of Radio Communication System)

Now, the structure of the radio communication system according to an embodiment of the present invention will be described below. In this radio communication system, the radio communication methods according to the embodiment of the present invention are employed. Note that the radio communication methods of the above-described embodiment may be applied individually or may be applied in combination. Here, although MTC terminals will be shown as an example of user terminals that are limited to using reduced bandwidths as bandwidths for their use, the present invention is by no means limited to MTC terminals.

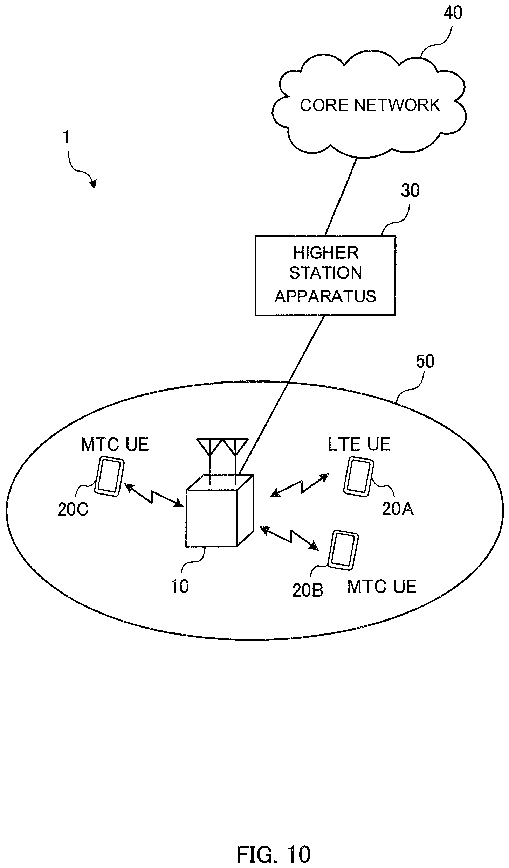

FIG. 10 is a diagram to show a schematic structure of the radio communication system according to an embodiment of the present invention. The radio communication system 1 shown in FIG. 10 is an example of employing an LTE system in the network domain of a machine communication system. The radio communication system 1 can adopt carrier aggregation (CA) and/or dual connectivity (DC) to group a plurality of fundamental frequency blocks (component carriers) into one, where the LTE system bandwidth constitutes one unit. Also, although, in this LTE system, the system bandwidth is configured to maximum 20 MHz in both the downlink and the uplink, this configuration is by no means limiting. Note that the radio communication system 1 may be referred to as "SUPER 3G," "LTE-A" (LTE-Advanced), "IMT-Advanced," "4G," "5G," "FRA" (Future Radio Access), and so on.

The radio communication system 1 is comprised of a radio base station 10 and a plurality of user terminals 20A, 20B and 20C that are connected with the radio base station 10 by radio. The radio base station 10 is connected with a higher station apparatus 30, and connected with a core network 40 via the higher station apparatus 30. Note that the higher station apparatus 30 may be, for example, an access gateway apparatus, a radio network controller (RNC), a mobility management entity (MME) and so on, but is by no means limited to these.

A plurality of user terminal 20A, 20B and 20C can communicate with the radio base station 10 in a cell 50. For example, the user terminal 20A is a user terminal that supports LTE (up to Rel-10) or LTE-Advanced (including Rel-10 and later versions) (hereinafter referred to as an "LTE terminal"), and the other user terminals 20B and 20C are MTC terminals that serve as communication devices in machine communication systems. Hereinafter the user terminals 20A, 20B and 20C will be simply referred to as "user terminals 20, " unless specified otherwise.

Note that the MTC terminals 20B and 20C are terminals that support various communication schemes including LTE and LTE-A, and are by no means limited to stationary communication terminals such electric meters, gas meters, vending machines and so on, and can be mobile communication terminals such as vehicles. Furthermore, the user terminals 20 may communicate with other user terminals directly, or communicate with other user terminals via the radio base station 10.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bandwidths formed with one or continuous resource blocks per terminal, and allowing a plurality of terminals to use mutually different bandwidths. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Block) and so on are communicated by the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data and higher layer control information are communicated by the PUSCH. Also, downlink radio quality information (CQI: Channel Quality Indicator), delivery acknowledgement signals and so on are communicated by the PUCCH. By means of the PRACH, random access preambles (RA preambles) for establishing connections with cells are communicated.

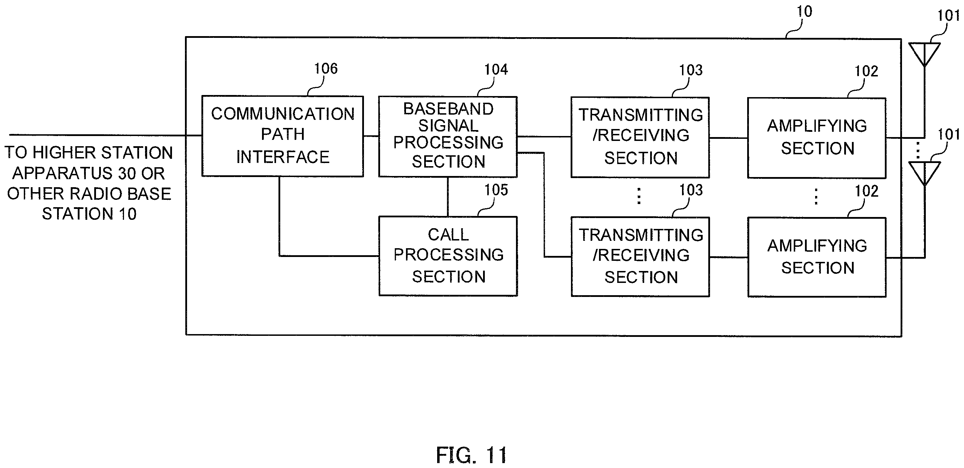

FIG. 11 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency bandwidth and transmits the resulting signals. The radio frequency signals subjected to frequency conversion in the transmitting/receiving sections 103 are amplified in the amplifying sections 102, and transmitted from the transmitting/receiving antennas 101. The transmitting/receiving sections 103 can transmit and/or receive various signals in a reduced bandwidth (for example, 1.4 MHz) that is more limited than a system bandwidth (for example, one component carrier).

The transmitting/receiving sections 103 can transmit downlink signals (for example, the EPDCCH, the PDSCH, etc.) to the user terminals in repetitions. In this case, the transmitting/receiving sections 103 may repeat transmitting a downlink signal in multiple subframes as one unit. Also, the transmitting/receiving sections 103 can report information related to the transmission intervals in repetitious transmission and/or information related to the number of times transmission is repeated, to the user terminals. In this case, the transmitting/receiving section 103 can report information related to the transmission intervals on a per user terminal basis or on a per cell basis. Furthermore, the transmitting/receiving sections 103 may report information about repetitious transmission patterns to a plurality of user terminals. Also, the transmitting/receiving sections 103 may transmit information about predetermined resources to be allocated to each user terminal based on the transmission intervals applied to downlink signals in repetitious transmission.

For the transmitting/receiving sections 103, transmitters/receivers, transmitting/receiving circuits or transmitting/receiving devices that can be described based on common understanding of the technical field to which the present invention pertains can be used.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. The communication path interface 106 transmits and receive s signals to and from neighboring radio base stations 10 (backhaul signaling) via an inter-base station interface (for example, optical fiber, the X2 interface, etc.).

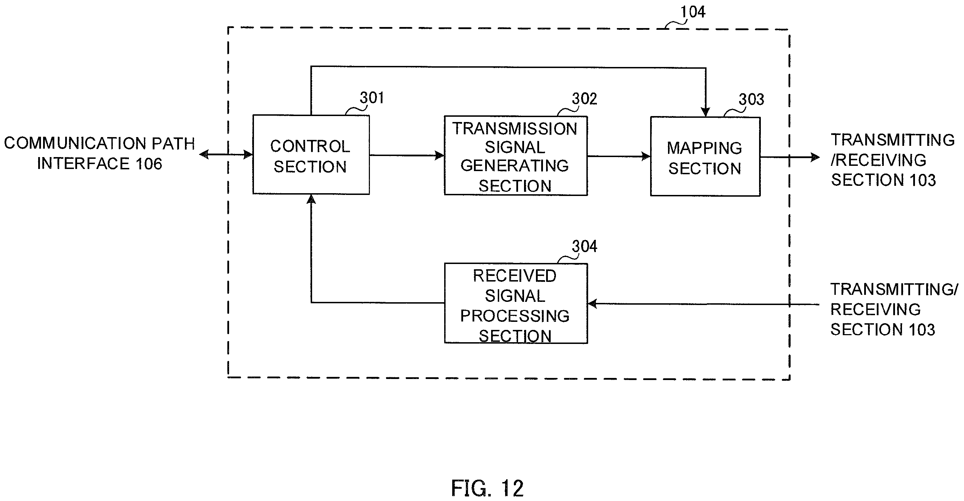

FIG. 12 is a diagram to show an example of a functional structure of a radio base station according to the present embodiment. Note that, although FIG. 12 primarily shows functional blocks that pertain to characteristic parts of the present embodiment, the radio base station 10 has other functional blocks that are necessary for radio communication as well. As shown in FIG. 12A, the baseband signal processing section 104 has a control section (scheduler) 301, a transmission signal generating section (generation section) 302, a mapping section 303 and a received signal processing section 304.

The control section (scheduler) 301 controls the scheduling (for example, resource allocation) of downlink data signals that are transmitted in the PDSCH and downlink control signals that are communicated in the PDCCH and/or the EPDCCH. Also, the control section 301 controls the scheduling of downlink reference signals such as system information, synchronization signals, CRSs (Cell-specific Reference Signals), CSI-RSs (Channel State Information Reference Signals) and so on. Also, the control section 301 controls the scheduling of uplink reference signals, uplink data signals that are transmitted in the PUSCH, uplink control signals that are transmitted in the PUCCH and/or the PUSCH, random access preambles that are transmitted in the PRACH, and so on.

The control section 301 controls the transmission signal generating section 302 and the mapping section 303 to allocate various signals to reduced bandwidths and transmit these to the user terminals 20. For example, the control section 301 controls downlink system information (the MIB, SIBs, etc.) and EPDCCHs to be allocated to reduced bandwidths.

Also, the control section 301 exerts control to transmit PDSCHs to the user terminals 20 in predetermined reduced bandwidths. Note that, when the radio base station 10 employs coverage enhancement, for example, the control section 301 may configure the number of repetitions for a DL signal for a predetermined user terminal 20, and repeat transmitting the DL signal based on this number of repetitions. Furthermore, the control section 301 may control the number of repetitions to be reported to the user terminal 20 in a control signal (DCI) in the EPDCCH or by using higher layer signaling (for example, RRC signaling, broadcast information, etc.).

Also, the control section 301 can configure transmission intervals in repetitious transmission based on predetermined conditions, and control the transmission of DL signals. For example, the control section 301 can control the transmission intervals based on the number of times transmission is repeated (the number of repetitions). Alternatively, the control section 301 can control the transmission intervals based on at least one of the modulation scheme/channel coding rate (MCS: Modulation and Coding Scheme), the channel quality indicator (CQI), the received power (RSRP) and the received quality (RSRQ). Also, the control section 301 can control the transmission intervals in repetitious transmission based on whether or not frequency hopping is applied to downlink signals.

Also, when the number of repetitions for a UL signal (for example, the PUCCH and/or the PUSCH) is configured in a user terminal 20, the control section 301 may control this user terminal 20 to transmit information related to the transmission intervals.

For the control section 301, a controller, a control circuit or a control device that can be described based on common understanding of the technical field to which the present invention pertains can be used.

The transmission signal generating section 302 generates DL signals based on commands from the control section 301 and outputs these signals to the mapping section 303. For example, the transmission signal generating section 302 generates DL assignments, which report downlink signal allocation information, and UL grants, which report uplink signal allocation information, based on commands from the control section 301. Also, the downlink data signals are subjected to a coding process and a modulation process, based on coding rates and modulation schemes that are selected based on channel state information (CSI) from each user terminal 20 and so on.

Also, when repetitious DL signal transmission (for example, repetitious PDSCH transmission) is configured, the transmission signal generating section 302 generates the same DL signal over a plurality of subframes and outputs these signals to the mapping section 303. For the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined reduced bandwidth radio resources (for example, maximum 6 resource blocks) based on commands from the control section 301, and outputs these to the transmitting/receiving sections 103. For the mapping section 303, mapper, a mapping circuit or a mapping device that can be described based on common understanding of the technical field to which the present invention pertains can be used.

The received signal processing section 304 performs the receiving processes (for example, demapping, demodulation, decoding and so on) of the UL signals that are transmitted from the user terminals (for example, delivery acknowledgement signals (HARQ-ACKs), data signals that are transmitted in the PUSCH, random access preambles that are transmitted in the PRACH, and so on). The processing results are output to the control section 301.

Also, by using the received signals, the received signal processing section 304 may measure the received power (for example, the RSRP (Reference Signal Received Power)), the received quality (for example, the RSRQ (Reference Signal Received Quality)), channel states and so on. The measurement results may be output to the control section 301. The receiving process section 304 can be constituted by a signal processor, a signal processing circuit or a signal processing device, and a measurer, a measurement circuit or a measurement device that can be described based on common understanding of the technical field to which the present invention pertains.

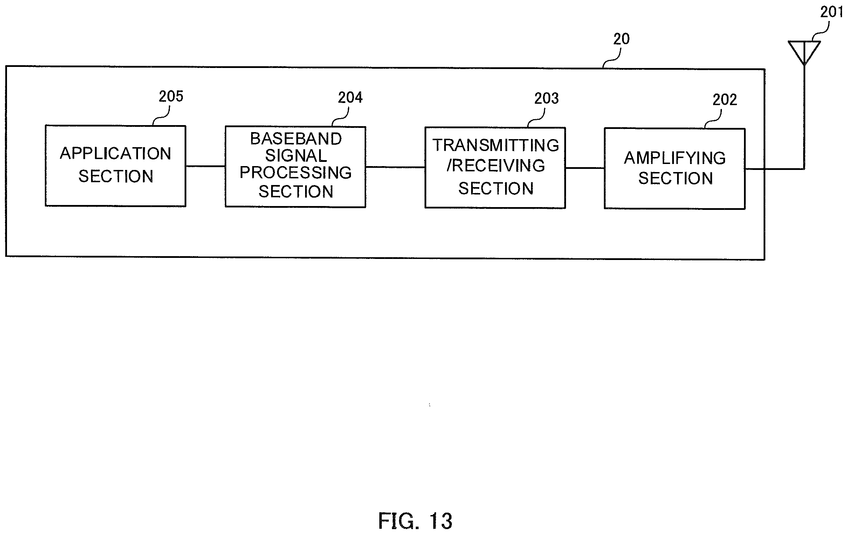

FIG. 13 is a diagram to show an example of an overall structure of a user terminal according to the present embodiment. Note that, although the details will not be described here, normal LTE terminals may operate and act as MTC terminals. A user terminal 20 has a transmitting/receiving antenna 201, an amplifying section 202, a transmitting/receiving section 203, a baseband signal processing section 204 and an application section 205. Note that the transmitting/receiving section 203 is comprised of a transmitting section and a receiving section. Also, the user terminal 20 may have a plurality of transmitting/receiving antennas 201, amplifying sections 202, transmitting/receiving sections 203 and so on.

A radio frequency signal that is received in the transmitting/receiving antenna 201 is amplified in the amplifying section 202. The transmitting/receiving section 203 receives the downlink signal amplified in the amplifying section 202. The received signal is subjected to frequency conversion and converted into the baseband signal in the transmitting/receiving section 203, and output to the baseband signal processing section 204.

The transmitting/receiving section 203 can transmit an uplink signal (for example, the PUCCH, the PUSCH, etc.) to the radio base station in repetitions. In this case, the transmitting/receiving section 203 can transmit the uplink signal in multiple consecutive subframes as one unit. For the transmitting/receiving section 203, a transmitter/receiver, a transmitting/receiving circuit or a transmitting/receiving device that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203. The baseband signal that is output from the baseband signal processing section 204 is converted into a radio frequency bandwidth in the transmitting/receiving section 203 and transmitted. The radio frequency signal that is subjected to frequency conversion in the transmitting/receiving section 203 is amplified in the amplifying section 202, and transmitted from the transmitting/receiving antenna 201.

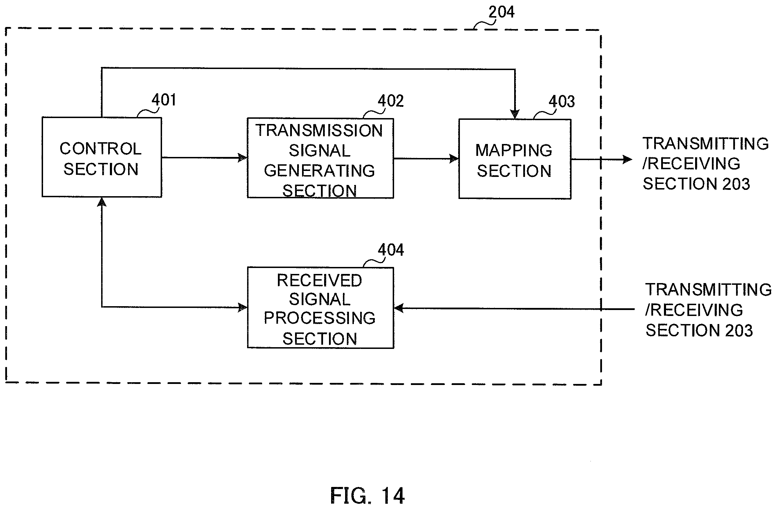

FIG. 14 is a diagram to show an example of a functional structure of a user terminal according to the present embodiment. Note that, although FIG. 14 primarily shows functional blocks that pertain to characteristic parts of the present embodiment, the user terminal 20 has other functional blocks that are necessary for radio communication as well. As shown in FIG. 14, the baseband signal processing section 204 provided in the user terminal 20 has a control section 401, a transmission signal generating section 402, a mapping section 403 and a received signal processing section 404.

The control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not retransmission control is necessary for the downlink data signals, and so on.

To be more specific, the control section 401 controls the transmission signal generating section 402 and the mapping section 403. Also, control section 401 can control receiving process (process of received signal processing section 404, process of transmitting/receiving section 203) based on information reported by the radio base station. Also, even while a DL signal that is transmitted in repetitions is being received (repetition is in progress), the control section 401 may exert control so that, if the DL signal is received successfully, a delivery acknowledgement signal (HARQ-ACK) is fed back. By this means, the radio base station can release the radio resources reserved for the rest of the repetitions of the DL data, thereby improving the spectral efficiency.

Also, the control section 401 can select the transmission intervals in repetitious transmission based on predetermined conditions, and control the transmission of uplink signals. For example, the control section 401 can switch and apply the transmission intervals based on the number of times transmission is repeated. Alternatively, the control section 301 can switch and apply the transmission intervals based on at least one of the modulation scheme/channel coding rate (MCS: Modulation and Coding Scheme), the channel quality indicator (CQI), the received power (RSRP) and the received quality (RSRQ).

For the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs), channel state information (CSI) and so on, based on commands from the control section 401. Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal.

Furthermore, when repetitious UL signal transmission (for example, repetitious PUCCH and/or PUSCH transmission) is configured, the transmission signal generating section 402 generates the same UL signal over a plurality of subframes and outputs these signals to the mapping section 403. The number of times to repeat transmission may be increased and/or decreased based on commands from the control section 401. For the transmission signal generating section 402, a signal generator, a signal generating circuit or a signal generating device that can be described based on common understanding of the technical field to which the present invention pertains can be used.

The mapping section 403 maps the uplink signals generated in the transmission signal generating section 402 to radio resources (maximum 6 resource blocks) based on commands from the control section 401, and output these to the transmitting/receiving sections 203. For the mapping section 403, mapper, a mapping circuit or a mapping device that can be described based on common understanding of the technical field to which the present invention pertains can be used.

The received signal processing section 404 performs receiving processes (for example, demapping, demodulation, decoding and so on) of DL signals (for example, downlink control signals transmitted from the radio base station, downlink data signals transmitted in the PDSCH, and so on). Also, the received signal processing section 404 performs receiving processes based on the transmission intervals applied to the downlink signals in repetitious transmission. In this case, the received signal processing section 404 may perform receiving processes based on information related to the transmission intervals reported from the radio base station, or may learn the transmission intervals from predetermined parameters and perform the receiving processes accordingly.

The received signal processing section 404 outputs the information received from the radio base station 10, to the control section 401. The received signal processing section 404 outputs, for example, broadcast information, system information, RRC signaling, DCI and so on, to the control section 401. Also, the received signal processing section 404 may measure the received power (RSRP), the received quality (RSRQ) and channel states, by using the received signals. Note that the measurement results may be output to the control section 401.

The received signal processing section 404 can be constituted by a signal processor, a signal processing circuit or a signal processing device, and a measurer, a measurement circuit or a measurement device that can be described based on common understanding of the technical field to which the present invention pertains. Also, the received signal processing section 404 can constitute the receiving section according to the present invention.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two or more physically-separate devices via radio or wire and using these multiple devices.

For example, part or all of the functions of radio base stations 10 and user terminals 20 may be implemented using hardware such as an ASIC (Application-Specific Integrated Circuit), a PLD (Programmable Logic Device), an FPGA (Field Programmable Gate Array), and so on. Also, the radio base stations 10 and user terminals 20 may be implemented with a computer device that includes a processor (CPU), a communication interface for connecting with networks, a memory and a computer-readable storage medium that holds programs.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes. Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Now, although the present invention has been described in detail above, it should be obvious to a person skilled in the art that the present invention is by no means limited to the embodiments described herein. For example, the above-described embodiments may be used individually or in combinations. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-080325, filed on April 9, 2015, including the specification, drawings and abstract, is incorporated herein by reference in its entirety.

## Claims

1. A radio base station that communicates with a user terminal, in which a bandwidth to use is limited to a partial reduced bandwidth in a system bandwidth, the radio base station comprising:
a transmission section that transmits a downlink signal to the user terminal in repetitious transmission; and
a control section that controls transmission intervals in the repetitious transmission,
wherein the transmission section reports information related to the transmission intervals in the repetitious transmission to the user terminal.

2. The radio base station according to claim 1, wherein the transmission section reports the information related to the transmission intervals on a per user terminal basis or on a per cell basis.

3. The radio base station according to claim 1 or claim 2, wherein the transmission section reports information related to different patterns of repetitious transmission to a plurality of user terminals.

4. The radio base station according to claim 1, wherein:
the control section controls the transmission intervals in repetitious transmission based on the number of times transmission is repeated; and
the transmission section reports information related to the number of times transmission is repeated, to the user terminal.

5. The radio base station according to claim 1, wherein the control section controls the transmission intervals in repetitious transmission based on at least one of a modulation scheme/channel coding rate (MCS: Modulation and Coding Scheme), a channel quality indicator (CQI: Channel Quality Indicator), received power (RSRP) and received quality (RSRQ).

6. The radio base station according to claim 1, wherein the control section controls the transmission intervals in repetitious transmission based on whether or not frequency hopping is applied to the downlink signal.

7. The radio base station according to claim 1, wherein the transmission section transmits information related to a predetermined resource to allocate to each user terminal based on the transmission intervals in repetitious transmission applied to the downlink signal.

8. The radio base station according to claim 1, wherein the transmission section transmits the downlink signal in repetitious transmission in a plurality of consecutive subframes as one unit.

9. A radio communication method for allowing a radio base station to communicate with a user terminal, in which a bandwidth to use is limited to a partial reduced bandwidth in a system bandwidth, the radio communication method comprising the steps of:
controlling transmission intervals in repetitious transmission to apply to a downlink signal that is transmitted to the user terminal;
reporting information related to the transmission intervals in repetitious transmission; and
transmitting the downlink signal at predetermined transmission intervals.

10. A user terminal, in which a bandwidth to use is limited to a partial reduced bandwidth in a system bandwidth, the user terminal comprising:
a receiving section that receives a downlink signal that is subject to repetitious transmission; and
a control section that controls a receiving process of the downlink signal,
wherein the control section controls the receiving process of the downlink signal based on information related to transmission intervals in repetitious transmission.
